# EUROPÄISCHE PATENTANMELDUNG

(11) **EP 1 099 938 A1**
(43) Veröffentlichungstag der Anmeldung: **16.05.2001**
(21) Anmeldenummer: 00118039.7
(22) Anmeldetag: 23.08.2000
(51) Int. Cl.: G01F 1/684

(54) **Schutzeinrichtung für ein Messelement einer Messvorrichtung**

(30) Priorität: 09.11.1999 DE 19953776
(71) Anmelder: Pierburg Aktiengesellschaft, 41460 Neuss (DE)
(72) Erfinder: Blaszczyk, Johann, 41542 Dormagen (DE); Wienecke, Thomas, 41352 Korschenbroich (DE)
(74) Vertreter: Dietrich, Barbara

(57) **Zusammenfassung**

Die Erfindung betrifft eine Schutzeinrichtung für ein Meßelement in einer Meßvorrichtung.

Bekanntlich werden im strömenden Medium auch Partikel, bedingt durch undichte oder schlechte Luftfiltergehäuse, durch einen Strömungsdurchbruch (5) einer Meßvorrichtung (1) transportiert. Ein im Strömungsdurchbruch (5) befindlicher Strömungskanal (6) besteht dabei aus einem trichterförmigen Einlauf - und Auslaufquerschnitt. Dadurch wird eine Strömungsgeschwindigkeitserhöhung im Meßgebiet, das heißt an einem Meßelement (10) der Meßvorrichtung (1) erreicht. Bei größeren Partikeln können diese auf das Meßelement (10) der Meßvorrichtung (1) treffen und das Meßelement (10) zerstören.

Demgegenüber zeigt die vorliegende Lösung einen Strömungskanal (6) auf, in dem Umlenkschikanen die mit dem strömenden Medium transportierten Partikel abfangen bzw. umlenken, so daß diese das Meßelement (10) nicht oder kaum erreichen. Diese Umlenkschikanen können schräg, rechtwinklig oder s-förmig ausgebildet sein.

## Beschreibung

Die Erfindung betrifft eine Schutzeinrichtung nach dem Oberbegriff des Patentanspruchs 1.

In der DE 198 08 248 A1 wird eine Meßvorrichtung zur Messung der Masse eines strömenden Mediums offenbart. Insbesondere ist hierbei ein Strömungsdurchbruch beschrieben, der einen Strömungskanal besitzt, welcher im Einlaufquerschnitt eine Verjüngung aufweist, in parallel zueinander führenden Seiten mündet, um sich danach erneut aufzuweiten. Dadurch wird eine Strömungsgeschwindigkeitserhöhung im Meßgebiet, das heißt am Meßelement der Meßvorrichtung erreicht. Bekanntlich werden im Medium auch Partikel, beispielsweise bedingt durch undichte oder schlechte Luftfiltergehäuse, durch den Strömungskanal mit transportiert. Bei größeren Partikeln können diese auf das Meßelement treffen und dieses zerstören.

Hieraus ergibt sich Aufgabe, eine Schutzvorrichtung für ein Meßelement zu schaffen, wodurch das Meßelement eine erhöhte Zerstörungsunempfindlichkeit gegenüber Partikeln erhält.

Gelöst wird die Aufgabe durch die Merkmale des Patentanspruchs 1.

Dabei liegt der Erfindung die Idee zugrunde, einen Strömungskanal eines Strömungsdurchbruches derart zu verändern, daß die mit dem strömenden Medium transportierten Partikel abgefangen bzw. umgelenkt werden, so daß diese das Meßelement nicht oder kaum erreichen. Dazu wird die Strömungskanalgeometrie des Strömungsdurchbruchs mit einer Umlenkschikane in einer Zuleitung sowie in einer Ableitung des Strömungskanals verändert.

Vorteilhafte Ausführungen sind in den Unteransprüchen enthalten.
So kann die Umlenkschikane in der Zuleitung oder in der Ableitung schrägwinklig parallel geführte Seiten aufweisen, die zu einem Meßkanal hin runde oder eckige Übergänge besitzen.
Des weiteren ist es möglich, die Umlenkschikane als s-förmig parallel geführte Seiten zu gestalten.
In einer weiteren Ausführung kann die Umlenkschikane rechtwinklig parallel geführte Seiten besitzen.
Der Strömungskanal besitzt vorzugsweise einen gleichbleibenden Spalt zwischen der Zuleitung, dem Meßkanal sowie der Ableitung.
In einer besonderen Ausführung kann der Meßkanal gegenüber der Zuleitung und der Ableitung einen abweichend größeren oder kleineren Spalt besitzen.
Vorteilhaft ist auch das Aufbringen einer Polyimidschicht auf das Meßelement, wodurch das Meßelement durch eine elastische Schicht zusätzlich geschützt wird.

Anhand von Ausführungsbeispielen mit Zeichnung soll die Erfindung näher erläutert werden.

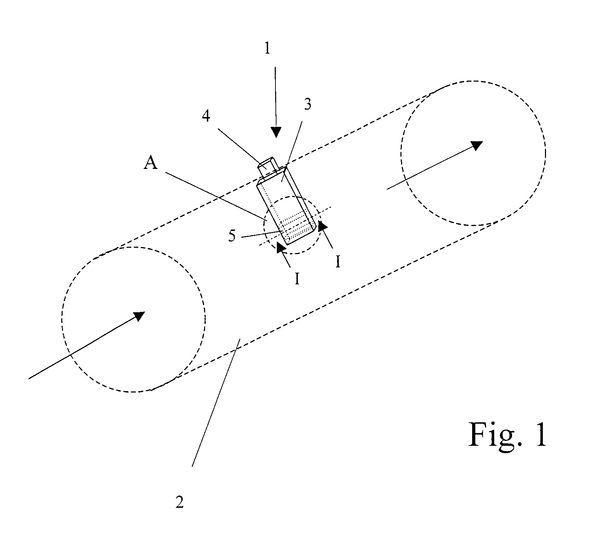

Es zeigt:
**Fig. 1**
   eine Anordnung einer Meßvorrichtung in einem Meßrohr,
**Fig. 2**
   eine Ausschnittdarstellung A im Schnitt I-I aus Fig. 1,
**Fig. 3, 4, 5 und 6**
   weitere Varianten der Ausschnittdarstellung A im Schnitt I-I aus Fig. 1.

In Fig. 1 ist eine Meßvorrichtung 1 zum Messen von strömenden Medien in einem Meßrohr 2, beispielsweise einem Ansaugrohr für eine Brennkraftmaschine, dargestellt. Die Meßvorrichtung 1 weist ein Gehäuse 3 sowie eine Halterung 4 zur Befestigung der Meßvorrichtung 1 im Meßrohr 2 auf.

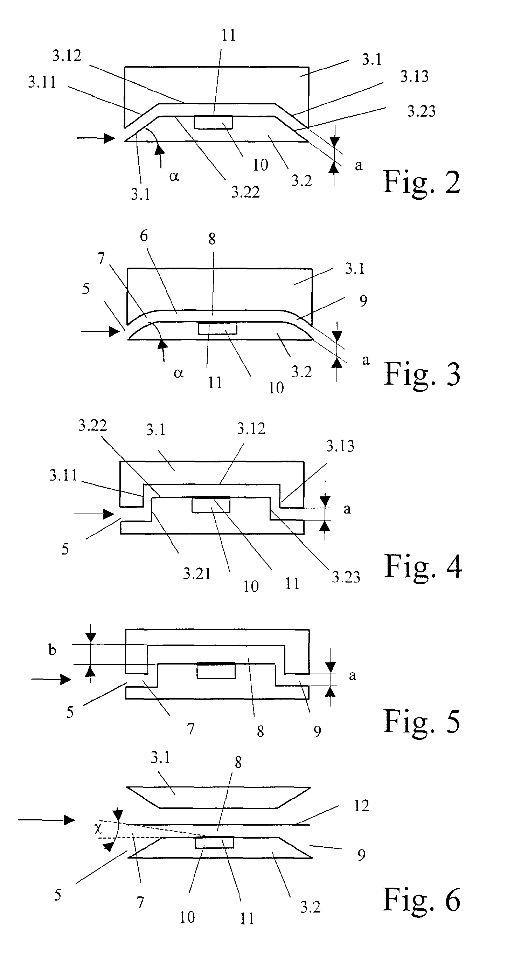

Das zu messende Medium strömt in Pfeilrichtung teilweise durch einen Strömungsdurchbruch 5 im Gehäuse 3 der Meßvorrichtung 1 hindurch, entlang eines Strömungskanals 6. Dieser Strömungskanal 6 unterteilt sich, wie in den Fig. 2 bis 6 dargestellt, in eine Zuleitung 7, einen Meßkanal 8 sowie eine Ableitung 9. In der Zuleitung 7 sowie der Ableitung 9 sind Umlenkschikanen integriert, wodurch die Geometrie des Strömungskanals 6 verändert wird. Innerhalb des Meßkanals 8 ist ein Meßelement 10 angeordnet, das mit einem unteren Gehäuseteil 3.2 fluchtet, so daß das Meßelement 10 nicht aus diesem Gehäuseteil 3.2 in den Strömungskanal 6 hineinragt.

Die Geometrie des Strömungskanals 6 wird durch die Seitenflächen 3.21 bis 3.23 eines unteren Gehäuseteils 3.2 sowie durch die Seitenflächen 3.11 bis 3.13 eines oberen Gehäuseteils 3.1 bestimmt.

In den Fig. 2 bis 6 sind verschiedene Umlenkschikanen, die im Strömungskanal 6 integriert sind, dargestellt. Da der Grundaufbau der in den Fig. 2 bis 6 dargestellten Varianten gleich ist, wurden bei der Beschreibung der Fig.2 alle Bezugszeichen benannt, die somit auch für die Fig. 3 bis 6 gültig sind. Der Übersichtlichkeit halber sind die Bezugszeichen jedoch nicht in jeder einzelnen Figur eingetragen, wobei bei der Betrachtung der Zeichnung die Fig. 2 und 3 zusammen sowie die Fig. 4 und 5 zusammen die gesamten Bezugszeichen wiedergeben.

In Fig. 2 besteht die Umlenkschikane in der Zuleitung 7 bzw. Ableitung 9 aus einem schrägwinkligen Anstieg bzw. Abfall der Seitenflächen 3.11, 3.13 sowie der Seitenflächen 3.21, 3.23, durch die die Zuleitung 7 bzw. Ableitung 9 gebildet werden. Dabei schließt die untere Außenfläche des Gehäuseteils 3.2 mit der Seitenfläche 3.2.1 einen Winkel a ein, der vorzugsweise > 10° ist. Parallel dazu ist die Seitenfläche 3.11 ausgerichtet, so daß die Zuleitung 7 zwei parallel geführte schräge Seitenflächen 3.11 sowie 3.21 besitzt, die durch einen Spalt ,a' voneinander beabstandet sind. Diesen Spalt ,a' beibehaltend, münden die Seitenflächen 3.11, 3.21 in die geraden und zueinander parallel geführten Seitenflächen 3.12 bzw. 3.22 des Meßkanals 8, wodurch sich kantige Übergänge zwischen den Seitenflächen 3.11 und 3.12 sowie 3.21 und 3.22 ergeben. In vorzugsweise umgekehrter Äquivalenz zur Zuleitung 7 ist die Ableitung 9 ausgebildet, so daß auch hier die Seitenflächen 3.13 und 3.23 zueinander parallel und schräg geführt sind. Vorzugsweise wird dabei er selbe Winkel a von der Seitenfläche 3.23 und der unteren Außenfläche des Gehäuseteils 3.2 eingeschlossen.

Einen ähnlichen geometrischen Aufbau zeigt Fig. 3, wobei hier runde Übergänge von der Zuleitung 7 und der Ableitung 9 zum Meßkanal 8 gebildet werden.

Bei beiden Varianten erfährt das strömende Medium eine doppelte Strömungsumlenkung durch die Umlenkschikane innerhalb des Strömungskanals 6. Hier nicht näher dargestellte Partikel des strömenden Mediums, die bedingt durch undichte oder schlechte Luftfiltergehäuse ( nicht dargestellt) mit dem Medium transportiert werden, werden bedingt durch ihr Fliehkraftverhalten in die Außenkurve, das heißt gegen die oberen Seitenflächen 3.11, 3.12, 3.13 des Gehäuseteils 3.1 geschleudert, so daß die Partikel nicht auf das Meßelement 10 im Meßkanal 8 gelangen können.

In Fig. 4 sowie in Fig. 5 besteht die Umlenkschikane innerhalb der Zuleitung 7 bzw. Ableitung 9 zum Meßkanal 8 hin aus S-förmig geführten Seitenflächen 3.11 bzw. 3.13 und im Abstand ,a' parallel dazu ausgerichtete Seitenflächen 3.21 und 3.23, wobei, wie in Fig. 5 dargestellt, der Meßkanal 8 einen größeren Spalt ,b' als die Zu- bzw. Ableitung 7, 9 aufweist.

Bei Zuführung des strömenden Mediums durch die Zuleitung 7 prallen die Partikel gegen die durch die Umlenkschikane gebildete Wand vor dem Meßkanal 8. Die Größe des Spaltes ,a', der wie bei den Varianten in den Fig. 2 und 3 in einem Bereich von 0,5 bis 3 mm, vorzugsweise 1,5 mm, gewählt wird, garantiert jedoch, daß die Partikel sich an dieser Wand nicht absetzen können und somit eine Verstopfung des Strömungskanals 6 vermieden wird.

Durch die Wahl eines größeren Spalts b (Fig. 5) im Meßkanal 8 wird zusätzlich die Strömungsgeschwindigkeit am Meßelement 10 reduziert, so daß noch verbliebene Partikel in ihrem Fliehkraftverhalten negativ beeinflußt werden. Dabei muß jedoch beachtet werden, daß ein zu großer Spalt ein Absetzen der Partikel auf dem Meßelement 10 ermöglichen, da diese mit der Strömungsgeschwindigkeit des Mediums nicht mit weg transportiert werden.

Dem gegenüber kann der Spalt b auch kleiner gewählt werden (nicht dargestellt). Hierbei ist dann zu beachten, daß der Spalt b nicht zu klein gewählt wurde, da es sonst zu Verstopfungen im Meßkanal 8 kommen kann. Deshalb ist es vorteilhaft, für ein gleichmäßiges strömendes Medium durch den Strömungskanal 6 einen kontinuierlichen, gleichbleibenden Spalt A zu verwenden.

In Berücksichtigung des Standes der Technik kann, wie in Fig. 6 dargestellt, der Strömungskanal 6 durch eine zusätzlich eingebaute Umlenkschikane in den Strömungskanal 6 derart aufgetrennt bzw. geteilt werden, daß der Aufprallwinkel χ der Partikel auf das Meßelement 10 eingeschränkt wird, wodurch eine Abnahme des Partikelbeschusses von 30 bis 50 % erreicht werden kann. Diese Umlenkschikane ist beispielsweise eine Blende 12, die in den Strömungskanal 6 integrierbar ist.

In vorteilhafter Art und Weise kann zusätzlich eine Polyimidschicht 11 auf das Meßelement 10 aufgebracht werden. Dabei hat sich in der Praxis eine Schicht von 2µm bewährt. Durch diese Schicht erfolgt ein elastisches Nachgeben bei Partikelbeschuß. Eine Zerstörung des Meßelements 10 wird dadurch weitestgehend ausgeschlossen.

Es versteht sich, daß die Umlenkschikane in Umkehrung der dargestellten Beispiele in der Zuleitung 7 abfallend und die Ableitung 9 ansteigend gestaltet sein kann. Auch können beide eine ansteigende bzw. beide eine abfallende Umlenkschikane aufweisen.

## Patentansprüche

1. Schutzvorrichtung für ein Meßelement in einer Meßvorrichtung gegenüber Schmutzpartikeln, wobei das Meßelement in einem Strömungskanal angeordnet ist und ein strömendes Medium über eine Zuleitung sowie eine Ableitung des Strömungskanals am Meßelement einseitig vorbei strömt und der Strömungskanal im Meßkanal parallelgeführte Seiten besitzt, dadurch gekennzeichnet, daß
- der Strömungskanal (6) eine Umlenkschikane in der Zuleitung (7) und in der Ableitung (9) besitzt, die zum Meßkanal (8) ansteigend oder abfallend ausgerichtet sind, wodurch an einer zwischen dem Meßkanal (8) und der in Strömungsrichtung weisenden ersten Umlenkschikane die Partikel abgefangen bzw. umgelenkt werden.

2. Schutzvorrichtung nach Anspruch 1, dadurch gekennzeichnet, daß die Umlenkschikane in der Zuleitung (7) und in der Ableitung (9) schrägwinklig parallelgeführte Seiten (3.11, 3.21, 3.13, 3.23) besitzt, die zum Meßkanal (8) hin runde oder eckige Übergänge aufweisen.

3. Schutzvorrichtung nach Anspruch 1, dadurch gekennzeichnet, daß die Umlenkschikane in der (7) und in der Ableitung (9) S-förmig parallelgeführte Seiten (3.11, 3.21, 3.13, 3.23) aufweist.

4. Schutzvorrichtung nach Anspruch 1, dadurch gekennzeichnet, daß die Umlenkschikane in der Zuleitung (7) und in der Ableitung (9) rechtwinklig parallelgeführte Seiten (3.11, 3.21, 3.13, 3.23) aufweist.

5. Schutzvorrichtung nach einem der Ansprüche 1 bis 4, dadurch gekennzeichnet, daß die Zuleitung (7) sowie die Ableitung (9) einen Spalt (a) von 0,5 bis 3 mm aufweisen.

6. Schutzvorrichtung nach Anspruch 5, dadurch gekennzeichnet, daß der Spalt (a) 1,5 mm beträgt.

7. Schutzvorrichtung nach einem der Ansprüche, dadurch gekennzeichnet, daß der Meßkanal (8) eine von der Zuleitung (7) und der Ableitung (9) abweichenden größeren oder kleineren Spalt (b) besitzt.

8. Schutzvorrichtung nach Anspruch 3 oder 4, dadurch gekennzeichnet, daß der Meßkanal (8) und die Zuleitung (7) und Ableitung (8) mit gleichem Abstand zueinander ausgerichtet sind.

9. Schutzvorrichtung, nach einem oder mehreren der vorgenannten Ansprüche, dadurch gekennzeichnet, daß eine Polyimidschicht auf dem Meßelement aufgebracht ist.

10. Schutzvorrichtung nach Anspruch 7, dadurch gekennzeichnet, daß die Polyimidschicht 2µm beträgt.
